# EUROPÄISCHE PATENTSCHRIFT

(11) **EP 0 883 528 B1**
(45) Veröffentlichungstag und Bekanntmachung des Hinweises auf die Patenterteilung: **05.12.2001**
(21) Anmeldenummer: 97915341.8
(22) Anmeldetag: 07.03.1997
(51) Int. Cl.: B60R 21/32, B60R 22/46, B60R 16/02

(54) **VORRICHTUNG ZUM STEUERN EINES INSASSENSCHUTZMITTELS IN EINEM KRAFTFAHRZEUG**
DEVICE FOR CONTROLLING A VEHICLE OCCUPANT PROTECTION SYSTEM
DISPOSITIF POUR COMMANDER UN SYSTEME DE PROTECTION DES OCCUPANTS D'UN VEHICULE

(30) Priorität: 08.03.1996 DE 19609079
(43) Veröffentlichungstag der Anmeldung: 16.12.1998
(73) Patentinhaber: SIEMENS AKTIENGESELLSCHAFT, 80333 München (DE)
(72) Erfinder: SCHMID, Gerhard, D-93049 Regensburg (DE); BAUMGARTNER, Walter, D-93197 Zeitlarn (DE); KÖPPL, Michael, D-93161 Sinzing (DE); HERMANN, Stefan, D-93096 Köfering (DE)
(86) Internationale Anmeldenummer: DE9700449
(87) Internationale Veröffentlichungsnummer: WO9732758

(56) Entgegenhaltungen:
- EP-A- 0 471 871
- EP-A- 0 507 581
- EP-A- 0 531 989
- WO-A-88/05390
- WO-A-89/09146
- DE-A- 3 222 570
- DE-U- 9 317 678
- US-A- 4 359 715
- US-A- 5 309 436
- "AIRBAG CURRENT SOURCE SELECT INTERFACE AND INADVERTANT DEPLOYMENT SAFING ALGORITHM" RESEARCH DISCLOSURE, Nr. 381, 1.Januar 1996, Seite 77 XP000549734

## Beschreibung

Die Erfindung betrifft eine Vorrichtung zum Steuern eines Insassenschutzmittels in einem Kraftfahrzeug gemäß Oberbegriff der nebengeordneten Patentansprüche 1, 2 und 3.

Eine solche Vorrichtung (EP 0 693 401 A2) ist ausgelagert d.h. beispielsweise in einem Seitenteil des Kraftfahrzeugs angeordnet. Die bekannte Vorrichtung enthält einen Beschleunigungssensor und eine Steuereinheit mit einem Codierer zum Codieren von Nachrichten sowie mit einem Sender zum Aussenden der codierten Nachrichten in Form von Signalen. Die zu übertragenden Nachrichten werden pulsweitenmoduliert an eine zentral im Fahrzeug angeordnete Auswerteeinrichtung übermittelt. Eine solche Nachricht kann beispielsweise den Inhalt haben: "Das Insassenschutzsystem soll ausgelöst werden, da die aufgenommene Beschleunigung einen vorgegebenen Schwellwert überschritten hat". An die Auswerteeinrichtung angeschlossene Zündelemente von Insassenschutzsystemen wie z.B. Seitenairbags, Gurtstraffern, Kopfairbags, o.ä. werden bei fehlerlos übertragener codierter Nachricht mit Energie beaufschlagt, so daß die zugehörigen Insassenschutzmittel aktiviert werden. Um eine fehlerhafte Übertragung zwischen ausgelagerter Vorrichtung und zentraler Auswerteeinrichtung zu erkennen, wird in der Auswerteeinrichtung die Periodendauer der übermittelten Signale mit einer Soll-Periodendauer verglichen. Stimmen gemessene Periodendauer und Soll-Periodendauer nicht überein, wird die übermittelte Nachricht verworfen. Eine fehlerbehaftete Übertragung kann insbesondere durch auf die Datenleitung einwirkende elektromagnetische Felder hervorgerufen werden.

Da zudem das eine Nachricht repräsentierende Signal von der ausgelagerten Vorrichtung periodisch an die zentrale Auswerteeinrichtung abgesetzt wird, wird zumindest verhindert, daß ein fehlerbehaftetes Signal auf immer unberücksichtigt bleibt. Sind jedoch auch die auf ein fehlerbehaftetes Signal nachfolgend übermittelten Signale fehlerbehaftet, so verstreicht gerade bei Signalen, die Auslösebefehle zum Inhalt haben, für das Auslösen des Insassenschutzmittels wertvolle Zeit. Insbesondere ein Auslösen eines Insassenschutzmittels zum Seitenaufprallschutz kann dann sogar zu spät erfolgen und dem Insassen Verletzungen zufügen, da die Zeitanforderungen für das Auslösen von Insassenschutzmitteln zum Seitenaufprallschutz äußerst hoch gesteckt sind: Innerhalb von 5 mSek ab Seitenaufprallbeginn sollte eine Auslöseentscheidung getroffen werden, da eine den Insassen schützende Knautschzone fehlt. Diese Auslösezeit kann bei Übertragung mehrerer fehlerbehafteter Signale hintereinander nicht eingehalten werden.

Aufgabe der Erfindung ist es deshalb, eine für das Auslösen eines Insassenschutzmittels relevante Daten aussendende Vorrichtung zu schaffen, die die Nachteile der bekannten Anordnung vermeidet, und die insbesondere eine sichere Übermittlung von Nachrichten an eine entfernt angeordnete Steuereinrichtung im Kraftfahrzeug innerhalb sehr kurzer Zeit ermöglicht.

Die Erfindung wird gelöst durch die Merkmale der nebengeordneten Patentansprüche 1, 2 und 3.

Üblicherweise wird der erfindungsgemäßen Vorrichtung zugrundegelegt, daß der Sender der Vorrichtung seriell arbeitet und die einzelnen Zeichen einer codierten Nachricht zeitlich nacheinander auf das Übertragungsmedium - vorzugsweise eine Datenleitung - ablegt. Einzelne Erfindungsgedanken kommen jedoch bei paralleler Übertragung zum Tragen.

Erfindungsgemäß werden Nachrichten mit unterschiedlichem Inhalt/Information in codierte Nachrichtenworte mit unterschiedlicher Länge umgesetzt. Dabei weist eine erste codierte Nachricht eine erste Anzahl von Stellen auf, eine zweite codierte Nachricht eine zweite Anzahl von Stellen, wobei die erste Anzahl kleiner ist als die zweite Anzahl. Vorzugsweise enthalten dabei Nachrichten, die ein Auslösen des zugeordneten Insassenschutzmittels fordern oder nagelegen in codierter Form eine geringere Anzahl von Stellen, als Nachrichten, die beispielsweise beschleunigungsunabhängige Information aufweisen. Aufgrund der geringen Stellenanzahl einer z.B. einen Auslösebefehl enthaltenden codierten Nachricht kann selbige seriell in äußerst kurzer Zeit übertragen werden und zudem in der die Nachricht empfangenden Steuereinrichtung äußerst schnell ausgewertet werden, sodaß die entsprechenden Maßnahmen sofort eingeleitet werden können. Nachrichten mit weniger dringlichem Inhalt können in codierter Form eine wesentlich höhere Anzahl von Stellen und damit eine größere Wortlänge aufweisen. Die erfindungsgemäße Vorrichtung offenbart auch insbesondere dann Vorteile, wenn eine große Anzahl unterschiedlicher Nachrichten vorgesehen sind, die nach herkömmlicher Codierung mit gleicher Stellenanzahl für alle Nachrichten eine hohe Stellenanzahl erfordern würden.

Nach Anspruch 2 der Erfindung kann eine codierte Nachricht nicht nur ein Informationswort enthalten, das den Sinngehalt der Nachricht in codierter Form enthält, sondern auch ein Steuerwort, das die Übertragung der codierten Nachricht steuert. Insbesondere bei asynchroner Datenübertragung aber auch bei synchroner Datenübertragung ist über das Informationswort hinaus das Steuerwort erforderlich. Es weist in der Regel eine dem Informationswort vorangestellte Stelle auf, die mit einem Startzeichen belegt ist, der den Beginn eines nachfolgenden Informationswortes kennzeichnet. Auf das Informationswort folgt gewöhnlich eine weitere dem Steuerwort der codierten Nachricht zugeordnete Stelle, die ein Stopzeichen aufweist, welches das Ende eines übertragenen Informationswortes kennzeichnet. Wesentlich bei einer Vorrichtung, die derart codierte Nachrichten erzeugt, ist, daß zumindest das Informationswort abhängig vom Inhalt einer Nachricht unterschiedliche Längen gemäß den Ausführungen zu Anspruch 1 aufweist. Dabei kann gegebenenfalls die Nachrichtenlänge von unterschiedlichen Nachrichten - also die Gesamtanzahl der mit Zeichen belegbaren Stellen - gleich sein, selbst wenn die eine codierte Nachricht höhrere Priorität genießt und ihr Informationswort nur wenige Stellen aufweist und die andere Nachricht niedrige Priorität genießt und ihr Informationswort viele Stellen enthält: Die codierte Nachricht mit dem kurz ausgebildeten Informationswort kann dafür ein länger ausgebildetes Steuerwort enthalten. Dabei enthält das Steuerwort vorzugsweise mehrere, also mindestens zwei für Stopzeichen vorgesehene Stellen: Damit wird auch das Startzeichen für die nächste codierte Nachricht nicht korrekt erkannt, sodaß dauerhaft eine falsche Synchronisation zwischen Sender und Empfänger vorliegt. Aus diesem Grund enthält insbesondere eine codierte Nachricht mit kurzem Informationswort ein längeres Steuerwort mit mehreren Stopzeichen. Wird ein Startzeichen nicht korrekt erkannt, so wird wahrscheinlich ein Zeichen des folgenden Informationswortes als Startzeichen interpretiert. Durch eine hohe Anzahl von Stopzeichen wird garantiert, daß auch in diesem Fall auf das "nach rechts verschobene", fehlinterpretierte Informationswort ein Stopzeichen folgt, sodaß die Synchronisation zwischen Sender und Empfänger wieder hergestellt wird und das Startzeichen der folgenden codierten Nachricht als solches erkannt wird. Die Vorteile dieser Vorrichtung entsprechen denen der Vorrichtung nach Anspruch 1, da für eine schnelle Übermittlung und Auswertung einer Nachricht die Stellenanzahl des Informationswortes und nicht die Stellenanzahl des Steuerwortes maßgebend ist.

Die bekannte Vorrichtung wird erfindungsgemäß nach Anspruch 3 derart fortgebildet, daß die zu übermittelnde Nachricht mit einem Fehlerkorrekturcode codiert wird. Ein solcher Fehlerkorrekturcode weist die Eigenschaft auf, daß zumindest ein fehlerbehaftetes Zeichen einer codierten Nachricht von der Empfangseinrichtung erkannt und korrigiert werden kann.

Bei einem beispielhaften Fehlerkorrekturcode wird ein einzelnes Zeichen einer Nachricht auf mehrere zu übertragende Zeichen abgebildet. So wird im Sender beispielsweise bei binärer Codierung das Zeichen 0 auf drei aufeinanderfolgende Nullen abgebildet. Die Empfangseinrichtung bildet über die drei empfangenen Zeichen einen Mehrheitsentscheid. Werden also von den abgesendeten drei Nullen mindestens zwei Nullen empfangen, so wird als eigentlich zu übermittelndes Zeichen eine Null interpretiert. Die für eine Datenübertragung mit Fehlerkorrekturcode zur Verfügung zu stellende Anzahl von Stellen, auch Hamming-Distanz genannt, berechnet sich nach 2•n+1 mit n als Stellenanzahl der mit einem Fehlerkorrekturcode zu versehenden Zeichen/Stellen des ursprünglichen Codewortes.

Durch die Verwendung eines Fehlerkorrekturcodes bei der Erstellung von Nachrichten einer Vorrichtung zum Steuern eines Insassenschutzmittels ist die Wahrscheinlichkeit erheblich gemindert, daß Zeitverluste durch Verwerfen einer fehlerbehafteten codierten Nachricht durch die Empfangseinrichtung entstehen. Die Wahrscheinlichkeit für einen Doppel- oder Mehrfachfehler in einer codierten Nachricht, der auch bei der Verwendung eines fehlerkorrigierenden Codes zu einer gegebenenfalls durch die Empfangseinrichtung falsch interpretierten Nachricht bzw. zu verwerfenden Nachricht führen würde, ist wesentlich geringer als die Wahrscheinlichkeit für einen Einfachfehler. Durch die Anwendung eines fehlerkorrigierenden Codes auf Datenübertragunsstrecken in Systemen zum Steuern von Insassenschutzmitteln wird also die Störanfälligkeit des Gesamtsystems vermindert und gleichzeitig ein zeitgerechtes und insbesondere bei der Seitenaufprallerkennung rechtzeitiges Auslösen der Insassenschutzmittel erreicht, da im Vergleich zur mehrfachen Codewortübertragung, die bei mit lediglich fehlererkennendem Code codierten Codeworten und einem Fehler in jedem Codewort erforderlich ist, ein Zeitgewinn erzielt werden kann.

Die Nachrichten für ein Insassenschutzsystem können erfindungsgemäß also mit variabler Codelänge und/oder Fehlerkorrekturcode unabhängig voneinander oder in vorteilhafter Weise miteinander kombiniert codiert werden.

Vorteilhafte Weiterbildungen der Erfindung sind in den Unteransprüchen gekennzeichnet. Die Erfindung und ihre Weiterbildungen werden anhand der Zeichnungen näher erläutert. Es zeigen:
- Figuren 1 bis 6: beispielhafte Nachrichten, codierte Nachrichten und Informationsworte wie sie von der erfindungsgemäßen Vorrichtung erzeugt werden, und
- Figur 7: eine erfindungsgemäße Anordnung zum Steuern eines Insassenschutzsystems in einem Kraftfahrzeug mit zwei beanspruchten erfindungsgemäßen Vorrichtungen.

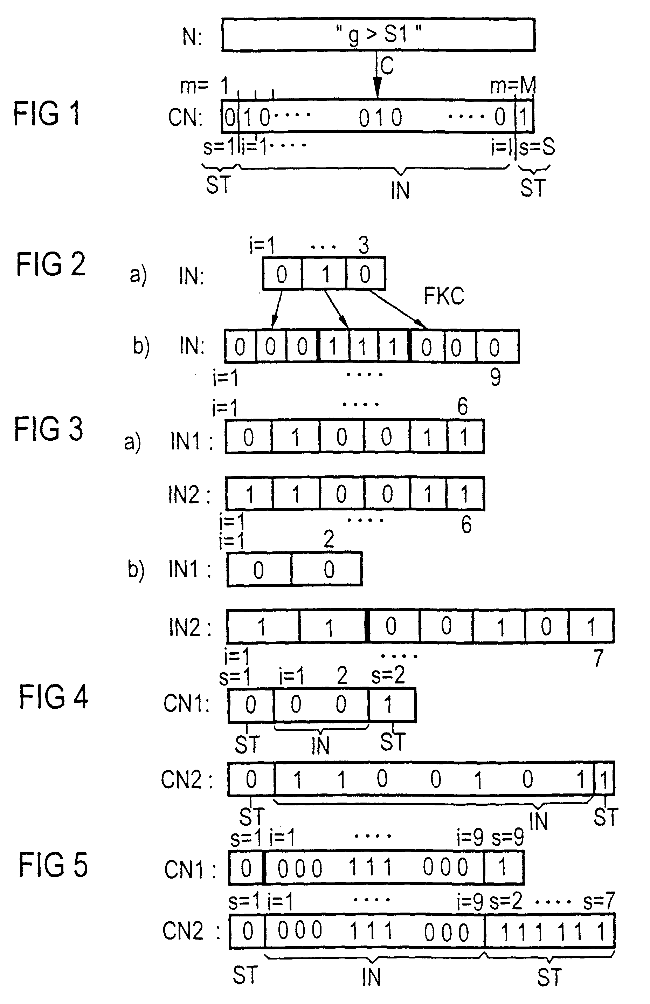

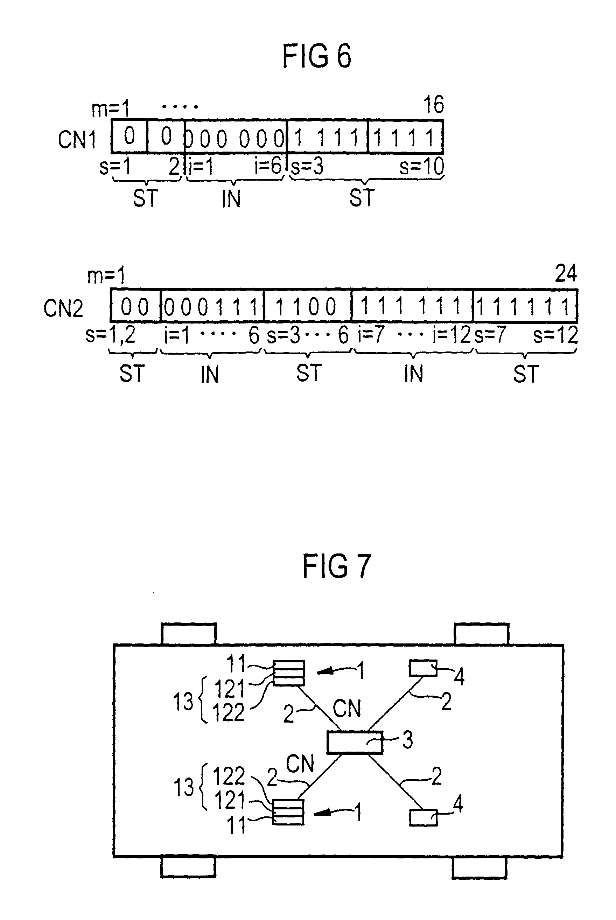

Figur 1 zeigt eine symbolische Nachricht N, die von einer Vorrichtung zum Steuern eines Insassenschutzsmittels in einem Kraftfahrzeug über ein geeignetes Übertragungsmedium, beispielsweise eineelektrische oder optische Datenleitung, oder aber auch berührungslos zu einer räumlich entfernt angeordneten Empfangseinrichtung übertragen werden soll. Gemäß Figur 7 kann die Vorrichtung 1 als ausgelagerte Sensoreinheit ausgebildet sein, die einen Beschleunigungsensor 11 zur Aufnahme von Fahrzeugquerbeschleunigungen und eine Steuereinheit 12 mit einem nicht gezeigten Auswerter, einem Codierer 121 und einem Sender 122 enthält. Durch einen Aufprall hervorgerufene Fahrzeugquerbeschleunigungen werden im Auswerter ausgewertet. Überschreitet zum Beispiel die Querbeschleunigung einen vorgegebenen Schwellwert, soll die entspechende Nachricht N über eine Datenleitung 2 an eine zentral im Fahrzeug angeordnete Auswerteeinrichtung 3 als Empfangseinrichtung übermittelt werden soll. Im Codierer 121 wird die entsprechende Nachricht N codiert. Über den Sender 122 wird die codierte Nachricht CN seriell auf die Datenleitung 2 ausgegeben. Die Auswerteeinrichtung 3 ist zum Beispiel am Fahrzeugtunnel angeordnet und enthält einen nicht eingezeichneten Empfänger und Decodierer zum Empfangen und Decodieren der übermittelten codierten Nachrichten CN. Liegt beispielsweise zusätzlich zur einen Auslösebefehl enthaltenen Nachricht noch die Information vor, daß der entsprechende Fahrzeugsitz belegt ist, wird von der Auswerteeinrichtung 3 über eine weitere Datenleitung 2 ein als codierte Nachricht ausgebildeter Auslösebefehl an eine Zündeinrichtung 4 übertragen. Die Zündeinrichtung 4 enthält wiederum einen nicht eingezeichneten Empfänger und Decodierer, so daß der übermittelte Auslösebefehl empfangen und decodiert werden kann. Wird der Auslösebefehl als solcher von der Zündeinrichtung 4 erkannt, wird durch selbige ein Zündelement des zugeordneten Insassenschutzmittels aktiviert.

Gemäß Figur 7 können die erfindungsgemäß vorgeschlagenen Codierungsvorschriften angewendet werden für die Übermittlung von Nachrichten auf Datenleitungen 2 zwischen ausgelagerten Vorrichtungen 1 und der Auswerteeinrichtung 3 und/oder zwischen der Auswerteeinrichtung 3 und den Zündeinrichtungen 4. Bei letzterer Möglichkeit ist die Auswerteeinrichtung 3 als erfindungsgemäße Vorrichtung anzusehen, die eine Steuereinheit mit einem Codierer und einem Sender enthält, der erfindungsgemäß aufbereitete Nachrichten an die Zündeinrichtung 4 übermittelt. Es versteht sich, daß dann die Aufprallerkennung nicht an ausgelagerte Beschleunigungssensoren gebunden ist sondern beispielsweise ein Beschleunigungssensor zusammen mit der Auswerteeinrichtung im selben Steuergerät angeordnet ist.

Beispiele für zu übermittelnde Nachrichten von einer als ausgelagerte Sensoreinheit ausgebildete Vorrichtung an eine zentrale Auswerteeinrichtung sind:
- Beschleunigung g hat einen Schwellwert S1 überschritten (Ng>S1, siehe Figur 1),
- Vorrichtung in Betrieb,
- Vorrichtung außer Betrieb + festgestellter Fehler.

Beispiele für zu übermittelnde Nachrichten von einer als zentrale Auswerteeinheit ausgebildeten Vorrichtung an eine ausgelagerte Zündeinrichtung sind:
- Zündung durchführen,
- Vorrichtung in Betrieb,
- Vorrichtung fehlerhaft + Fehlercode.

Derartige Nachrichten N werden im Codierer der Vorrichtung mittels einer Codierungsvorschrift C in codierte Nachrichten/Nachrichtenworte umgesetzt (Figur 1). Gewöhnlicherweise enthält eine codierte Nachrichten ein Informationswort IN für den Inhalt der eigentlichen Nachricht und ein Steuerwort ST für die Steuerung der Datenübertragung. Gemäß Figur 1 weist die codierte Nachricht CN insgesamt M Stellen auf, von Stelle m=1 bis Stelle m=M, davon das Informationswort I Stellen, von Stelle i=1 bis Stelle i=I, und das Steuerwort ST S Stellen, von Stelle s=1 bis Stelle s=S. Die erste und die letzte Stelle m=1 und m=M der codierten Nachricht CN sind dem Steuerwort ST für die Belegung mit einem Startzeichen z.B. Null bzw einem Stopzeichen z.B. Eins zugeordnet. Im seriellen asynchronen Übertragungsmodus wird eine von der Vorrichtung derart zusammengestellte codierte Nachricht CN in der Empfangseinrichtung auf folgende Weise decodiert: Im übermittelten Datenstrom wird eine negative Flanke von Eins auf Null - eben von dem Stoppzeichen zum Startzeichen - erkannt und als Beginn eines neuen Informationswortes IN interpretiert. Nach dem Startzeichen 0 folgt eine vorgegebene Anzahl I von Stellen des Informationswortes IN, die gespeichert und decodiert werden. Darauffolgend wird auf das Stoppzeichen Eins gewartet. Wird das Stoppzeichen erkannt, so wird wiederum versucht, das den Beginn eines Informationswortes IN kennzeichnende Startzeichen Null zu erkennen.

In Figur 2 ist ein in herkömmlicher Weise codiertes Informationswort IN gemäß Abbildung a) und ein zugehöriges erfindungsgemäß mit einem Fehlerkorrekturcode FKC codiertes Informationswort IN gemäß Abbildung b) gezeigt. Das Informationswort IN gemäß Abbildung b) wird durch den Sender der Vorrichtung auf die Leitung ausgegeben. Jedes zu übertragende Zeichen einer der drei Stellen i= 1 bis 3 des Informationswortes gemäß Abbildung a) wird nach Anwendung des fehlerkorrigerenden Codes FKC durch drei Stellen abgebildet. Das Verfahren zur Decodierung eines derart codierten Informationswortes IN gemäß Abbildung b) ist in der Beschreibungseinleitung abgehandelt (Mehrheitsentscheid, etc). Es versteht sich, daß auch jeder andere fehlerkorrigierende Code Anwendung finden kann.

Vorzugsweise wird im Sinne einer möglichst zeitsparenden Übertragung und Auswertung lediglich das Informationswort IN einer codierten Nachricht CN gemäß Abbildung a) mittels der Anwendung eines fehlerkorrigierenden Codes auf ein zu übertragendes Informationswort IN beispielsweise gemäß Abbildung b) abgebildet. Im Hinblick auf die Störfestigkeit des Gesamtsystems kann ein Fehlerkorrekturcode auch auf die Zeichen des Steuerwortes der codierten Nachricht CN angewendet werden.

Das nach Anwendung eines fehlerkorrigierenden Codes FKC aus dem Informationswort IN gemäß Abbildung 2a) entstehende Informationwort IN gemäß Abbildung 2b) zusammen mit zugehörigem Steuerwort ST mit einem Startzeichen Null an der Stelle s=1 und einem Stoppzeichen Eins an der Stelle s=2 ist in Figur 5 als codierte Nachricht CN1 gezeigt. Gemäß Figur 5 kann das zugehörige Steuerwort ST jedoch auch derart ausgebildet sein, daß mehrere Stellen s=2 bis s=7 für Stoppzeichen vorgesehen sind, siehe codierte Nachricht CN2.

Gemäß Abbildung 3a) sind zwei Informationsworte IN1 und IN2 mit einer beispielhaften binären Zeichenbelegung gezeigt, wobei jedes Informationswort sechs Stellen i=1 bis i=6 aufweist. Das Informationswort IN1 enthalte eine Nachricht zum Auslösen des zugeordneten Insassenschutzmittels, das Informationswort IN2 enthalte als Nachricht ein Statussignal des Prozessors der Vorrichtung , die in ihrer Priorität der Nachricht "Auslösen" nachrangig ist. Erfindungsgemäß werden diese beiden Nachrichten nicht gemäß Abbildung 3a) mit gleicher Stellenanzahl codiert sondern gemäß Abbildung 3b) mit unterschiedlicher Stellenanzahl, wobei die vorrangige Nachricht durch ein Informationswort IN1 mit beispielhaft nur zwei Stellen i=1 und i=2 und die nachrangige Nachricht durch ein Informationswort IN2 mit sieben Stellen i=1 bis i=7 dargestellt wird. Eine Belegung der beiden ersten Stellen i=1 und i=2 des übermittelten Informationswortes mit einer Eins kennzeichnet dabei, daß auch nachfolgende fünf Stellen zum Informationswort zugehörig sind und in der Auswertung berücksichtigt werden müssen. Alle anderen Zeichenkombinationen für die ersten beiden Stellen des Informationswortes lassen der Empfangseinrichtung zu Erkennen geben, daß keine weiteren Stellen im Datenstrom dem Informationswort IN zuzurechnen sind.

Figur 4 zeigt die zu den Informationsworten IN1 und IN2 gemäß Abbildung 3b) zugehörigen codierten Nachrichten CN1 und CN2, die über die Informationsworte IN hinaus die Steuerworte ST enthalten.

Gemäß Figur 6 sind die erfindungsgemäßen Vorschläge zur Reduzierung von Auslösezeiten und der Erhöhung der Störfestigkeit in äußerst vorteilhafter Weise miteinander verbunden. Beispielhaft gezeigt sind zwei codierte Nachrichten CN1 und CN2, wobei die codierte Nachricht CN1 eine vorrangig eingestufte Nachricht - insbesondere beschleunigungsabhängige, auslösebeeinflussende Nachricht - enthält, die codierte Nachricht CN2 eine nachrangig eingestufte Nachricht, z.B. eine Statusmeldung oder einen Fehlercode. Die codierte Nachricht CN1 weist dabei ein sechsstelliges Informationswort IN auf, das mit einem fehlerkorrigierenden Code behaftet ist und aus einem ursprünglich zweistelligen Informationswort mit den Zeichen "00" abgeleitet wurde. Das Steuerwort ST weist insgesamt 10 Stellen auf. Davon sind die dem Informationswort IN vorangestellten Stellen s=1 und s=2 des Steuerwortes ST für das Startzeichen (Null) vorgesehen. Die dem Informationswort IN nachfolgenden Steuerstellen s=3 bis s=10 sind jeweils mit einer Eins belegt, wobei die Stelle s=3 als sog. Reservestelle ausgebildet ist und die Stellen s=4 bis s=10 für das Stopzeichen (Eins) vorgesehen sind: Ist lediglich ein einziges Startzeichen je codierter Nachricht vorgesehen, so interpretiert die Empfangseinrichtung bei fehlerhaft übermitteltem Startzeichen gewöhnlich ein Zeichen des Informationswortes IN als Startzeichen. Eine fehlerhafte Synchronisation des Senders mit dem Empfänger ist die Folge. Aufgrunddessen ist es vorteilhaft, zumindest ein weiteres Startzeichen/Startstelle vor dem Informationswort IN jeder codierten Nachricht CN vorzusehen, so daß bei fehlerhaft übertragenem ersten Startzeichen an der Stelle s=1 und korrekt übertragenem zweiten Startzeichen an der Stelle s=2 eine lediglich um eine Stelle verschobene Auswertung des Informationswortes eingeleitet werden kann. Wird erst das Zeichen an der Stelle s=2 als Startzeichen erkannnt, so werden die Stellen i=2 bis i=6 und die Reservestelle s=3 als Informationswort IN interpretiert anstelle der Stellen i=1 bis i=6, wobei infolge des fehlerkorrigierenden Codes z.B. die Stellen i=1 bis i=3 mit gleichen Zeichen und die Stellen i=4 bis i=6 mit gleichen Zeichen belegt sind. Schlechtestenfalls ist also bei dem um eine Stelle fehlinterpretierten Informationswort IN die Stelle i=4 ungleich der Stelle i=3 und die Stelle s=3 ungleich der Stelle i=6: So weisen sowohl die ersten drei Stellen i=2 bis i=4 des fehlinterpretierten Informationswortes IN als auch die zweiten drei Stellen i=5, i=6 und s=3 des Informationswortes IN einen Fehler auf, der bei ansonsten fehlerloser Übertragung jedoch von der Auswerteeinrichtung erkannt und korrigiert wird. Selbst bei nicht erkanntem ersten Startzeichen einer codierten Nachricht ist damit dennoch die Wahrscheinlichkeit für eine korrekte Interpretation der Nachricht durch die Empfangseinrichtung gewährleistet. Die als Reservestelle s=3 bezeichnete Stelle des Steuerwortes ST wird bei nicht erkannter erster Startstelle s=1 und erkannter zweiter Startstelle s=2 dem Informationswort IN zugeordnet und ist durch die erfindungsgemäße Vorrichtung zunächst frei belegbar. Vorzugsweise wird diese Referenzstelle mit dem Zeichen belegt, mit dem auch die Stellen des Informationswortes belegt sind, mit denen die Referenzstelle bei nicht erkanntem erste Startzeichen zusammen als Einheit gelesen wird, im Beispiel nach Figur 6 also nach der Belegung der Stellen i=5 und i=6. Damit wird auf indirektem Weg eine Fehlerkorrekturmöglichkeit für das Startzeichen bereitgestellt.

Die Steuerstellen s=4 bis s=10 stellen Stopzeichen dar, deren redundante Ausbildung ebenso zweckmäßig ist wie die redundante Ausbildung der Startstellen.

Die codierte Nachricht CN2 in Figur 6 weist gegenüber der codierten Nachricht CN1 nachrangige Priorität auf und ist weist damit eine größere Gesamtstellenanzahl M der codierten Nachricht CN und eine größere Stellenanzahl I des Informationswortes IN auf als das codierte Nachrichtenwort CN1 (M(CN2)=24 > M(CN2)=16; I(CN1)=6 < I(CN2)=12). Im Gegensatz zum Informationswort IN der codierten Nachricht CN1 ist das Informationswort IN der codierten Nachricht CN2 mit einer Zeichenkombination ("000111" mit Fehlerkorrektur bzw. "01" ohne Fehlerkorrektur) belegt, die der Empfangseinrichtung einen Hinweis darauf gibt, daß weitere Stellen der codierten Nachricht CN2 dem Informationswort IN zuzurechnen sind. Diese weiteren Stellen i=7 bis i=12 enthalten die eigentliche Information der codierten Nachricht CN2, wobei diese Stellen mit einem fehlerkorrigierenden Code behaftet sein können, aber nicht müssen.

Gemäß Beispiel in Figur 6 würde die erfindungsgemäße Vorrichtung drei vorrangig eingestufte verkürzte codierte Nachrichten gemäß der codierten Nachricht CN1 erzeugen können. Ist der zweite Abschnitt des Informationswortes IN mit den Stellen i=7 bis i=12 in fehlerkorrigierendem Code codiert, so lassen sich mit diesen sechs Stellen vier niederpriore Nachrichten darstellen, ist fehlerkorrigierender Code nicht erwünscht, so können bei 2⁶ nachrangig eingestufte Nachrichten dargestellt werden, jeweils binäre Codierung vorausgesetzt.

Mit obigen Ausführungen ist die Anzahl der Stellen und die Anzahl der redundanten Stellen (Fehlerkorrektur) einer codierten Nachricht optimiert hinsichtlich einer schnellen Datenübertragung von vorrangig eingestuften Nachrichten bei gleichzeitig hoher Störfestigkeit.

Auch die nachrangig eingestufte codierte Nachricht CN2 enthält zwei Startstellen. Dementsprechend ist die dem ersten Abschnitt i=1 bis i=6 des Informationswortes IN nachfolgende Stelle s=3 des Steuerwortes als vorgenannte Reservestelle zu betrachten. Die Steuerstelle s=4 beinhaltet ein Stopzeichen, wobei die Stellen s=5 und s=6 wiederum redundant für das Startzeichen Null vorgesehen sind. Die auf den zweiten Abschnitt i=7 bis i=12 des Informationswortes IN folgende Steuerstelle s=7 ist als weitere Reservestelle für den weiteren Abschnitt des Informationswortes i=7 bis i=12 vorgesehen, bevor die Steuerstellen s=8 bis s=12 Stopbits für die gesamte codierte Nachricht CN2 darstellen.

Zur Erhöhung der Störsicherheit der Datenübertragung kann vorgesehen sein, daß codierte Nachrichten trotz der Verwendung fehlerkorrigierenden Codes wiederholt ausgesendet werden, um auch mit geringer Wahrscheinlichkeit auftretende Doppel- oder Mehrfachfehler erfassen zu können. Ferner kann vorgesehen sein, daß innerhalb einer codierten Nachricht, also insbesondere zwischen Start- und Stopzeichen, das die eigentliche Information enthaltende Informationswort redundant gesendet wird. In der Empfangseinrichtung wird dann das erste Informationswort mit dem zweiten Informationswort einer codierten Nachricht verglichen und bei Abweichung die übermittelte Nachricht verworfen werden. Diese redundante Informationswortübertragung kann insbesondere vorteilhaft bei vorrangig eingestuften Nachrichten vorgesehen sein; Nachrichten also, die z.B. aufgrund ihrer kurzen Wortlänge nur eine ohnehin kurze Übertragungszeit beanspruchen.

Die Erfindung wurde zwar für die Verwendung binärer Codes dargestellt, findet aber entsprechend Anwendung bei mehrstufigen Codes. Die Erfindung gestattet eine überaus variable Gestaltung ihrer Hard- und Software wie auch der Ressourcen der Empfangseinrichtung.

## Patentansprüche

1. Vorrichtung zum Steuern eines Insassenschutzmittels in einem Kraftfahrzeug, mit einer Steuereinheit (12) mit einem Codierer (121) zum Codieren von Nachrichten (N) und mit einem Sender (122) zum Aussenden der codierten Nachrichten (CN) in Form von Signalen, **dadurch gekennzeichnet, daß** eine erste codierte Nachricht mit sicherheitsrelevanter Information mit einer ersten Anzahl von Stellen und eine zweite codierte Nachricht mit einer zweiten Anzahl von Stellen vorgesehen ist, wobei die erste Anzahl kleiner ist als die zweite Anzahl.

2. Vorrichtung zum Steuern eines Insassenschutzmittels in einem Kraftfahrzeug, insbesondere nach Anspruch 1, mit einer Steuereinheit (12) mit einem Codierer (121) zum Codieren von Nachrichten (N) und mit einem Sender (122) zum Aussenden der codierten Nachrichten (CN) in Form von Signalen, **dadurch gekennzeichnet, daß** die codierten Nachrichten (CN) je ein Informationswort (IN) und ein Steuerwort (ST) aufweisen daß das Informationswort (IN) einer ersten codierten Nachricht mit sicherheitsrelevanter Information eine erste Anzahl von Stellen und das Informationswort einer zweiten codierten Nachricht eine zweite Anzahl von Stellen aufweist, wobei die erste Anzahl kleiner ist als die zweite Anzahl.

3. Vorrichtung zum Steuern eines Insassenschutzmittels in einem Kraftfahrzeug, insbesondere nach Anspruch 1 oder Anspruch 2, mit einer Steuereinheit (12) mit einem Codierer (121) zum Codieren einer Nachricht (N) mit sicherheitsrelevanter Information und mit einem Sender (122) zum Aussenden der codierten Nachricht (CN) in Form eines Signals, **dadurch gekennzeichnet, daß** die Nachricht (N) mit einem Fehlerkorrekturcode (FKC) codiert wird.

4. Vorrichtung nach einem der vorhergehenden Ansprüche, **dadurch gekennzeichnet, daß** eine codierte Nachricht (CN) zwei identische Informationsworte enthält.

5. Vorrichtung nach Anspruch 3, **dadurch gekennzeichnet, daß** zumindest eine der vorgesehenen Nachrichten (N) derart codiert wird, daß die codierte Nachricht (CN) ein Informationswort (IN) aufweist mit einer ersten Anzahl von Stellen für ein mit dem Fehlerkorrekturcode (FKC) behaftetes Wort, und mit einer zweiten Anzahl von Stellen für ein ohne Fehlerkorrekturcode (FKC) behaftetes Wort.

6. Vorrichtung nach Anspruch 1 oder Anspruch 2 und Anspruch 5, **dadurch gekennzeichnet, daß** die erste Nachricht mit einem Fehlerkorrekturcode (FKC) codiert ist, und daß die zweite Nachricht teils mit, teils ohne Fehlerkorrekturcode (FKC) codiert ist.

7. Vorrichtung nach Anspruch 2 und Anspruch 3, **dadurch gekennzeichnet, daß** das Steuerwort (ST) mindestens zwei für ein Startzeichen vorgesehene Stellen aufweist, wobei ein Startzeichen auf den Beginn eines Informationswortes (IN) hinweist.

8. Vorrichtung nach Anspruch 7, **dadurch gekennzeichnet, daß** das Steuerwort (ST) mindestens eine mit einem Zeichen belegbare Reservestelle aufweist, die dem Informationswort (IN) zuordenbar ist.

9. Vorrichtung nach Anspruch 7, **dadurch gekennzeichnet, daß** das Steuerwort (ST) mindestens zwei für ein Stopzeichen vorgesehene Stellen aufweist, wobei ein Stopzeichen auf das Ende eines Informationswortes (IN) hinweist.

10. Vorrichtung nach Anspruch 1 oder 2, **dadurch gekennzeichnet, daß** die erste Nachricht vorrangig eingestufte Information enthält, und daß die zweite Nachricht nachrangig eingestufte Information enthält.

11. Vorrichtung nach Anspruch 10, **dadurch gekennzeichnet, daß** die erste Nachricht Information für ein mittelbares oder unmittelbares Auslösen des Insassenschutzmittels enthält, und daß die zweite Nachricht Zustandsinformation der Vorrichtung (1) enthält.

12. Vorrichtung (1) nach einem der vorhergehenden Ansprüche mit einem Beschleunigungssensor (11) zum Aufnehmen einer Fahrzeugbeschleunigung, und mit einer räumlich von der Vorrichtung (1) getrennt angeordneten Auswerteeinrichtung (3) zum Steuern des Insassenschutzmittels (4), wobei beschleunigungsabhängige Nachrichten in Form von Signalen von der Vorrichtung (1) an die Auswerteeinrichtung (3) übermittelt werden.

13. Vorrichtung (1) nach einem der Ansprüche 1 bis 11 zum Auswerten eines von einem die Fahrzeugbeschleunigung aufnehmenden Beschleunigungssensors (11) gelieferten Signals, und mit einer räumlich von der Vorrichtung (1) getrennt angeordneten Zündeinrichtung (4) zum Auslösen eines elektrisch mit der Zündeinrichtung (4) verbundenen Zündelements des Insassenschutzmittels, wobei Nachrichten (N) in Form von Signalen von der Vorrichtung (1) an die Zündeinrichtung (4) übermittelt werden.

## Claims

1. Device for controlling a motor vehicle occupant protection system, having a control unit (12) having an encoder (121) for encoding messages (N) and having a transmitter (122) for transmitting the encoded messages (CN) in the form of signals, **characterized in that** a first encoded message, containing information relevant to safety, having a first number of positions and a second encoded message having a second number of positions are provided, the first number being smaller than the second number.

2. Device for controlling a motor vehicle occupant protection system, in particular according to Claim 1, having a control unit (12) having an encoder (121) for encoding messages (N) and having a transmitter (122) for transmitting the encoded messages (CN) in the form of signals, **characterized in that** the encoded messages (CN) have in each instance an information word (IN) and a control word (ST), **in that** the information word (IN) of a first encoded message containing information relevant to safety has a first number of positions and the information word of a second encoded message has a second number of positions, the first number being smaller than the second number.

3. Device for controlling a motor vehicle occupant protection system, in particular according to Claim 1 or Claim 2, having a control unit (12) having an encoder (121) for encoding a message (N) containing information relevant to safety and having a transmitter (122) for transmitting the encoded message (CN) in the form of a signal, **characterized in that** the message (N) is encoded with an error-correction code (FKC).

4. Device according to one of the preceding claims, **characterized in that** an encoded message (CN) includes two identical information words.

5. Device according to Claim 3, **characterized in that** at least one of the provided messages (N) is encoded in such a manner that the encoded message (CN) has an information word (IN) with a first number of positions for a word loaded with the error-correction code (FKC), and with a second number of positions for a word loaded without error-correction code (FKC).

6. Device according to Claim 1 or Claim 2 and Claim 5, **characterized in that** the first message is encoded with an error-correction code (FKC), and **in that** the second message is encoded in part with and in part without error-correction code (FKC).

7. Device according to Claim 2 and Claim 3, **characterized in that** the control word (ST) has at least two positions provided for a start symbol, a start symbol indicating the commencement of an information word (IN).

8. Device according to Claim 7, **characterized in that** the control word (ST) has at least one reserve position which can be occupied by a symbol and which can be ascribed to the information word (IN).

9. Device according to Claim 7, **characterized in that** the control word (ST) has at least two positions provided for a stop symbol, a stop symbol indicating the end of an information word (IN).

10. Device according to Claim 1 or 2, **characterized in that** the first message contains information classified as being of higher priority, and **in that** the second message contains information classified as being of lower priority.

11. Device according to Claim 10, **characterized in that** the first message contains information appertaining to an indirect or direct triggering of the occupant protection system, and **in that** the second message contains information on the condition of the device (1).

12. Device (1) according to one of the preceding claims having an acceleration sensor (11) to record a vehicle acceleration, and having an evaluation device (3), disposed spatially separately from the device (1), for controlling the occupant protection system (4), in which acceleration-dependent messages are transmitted in the form of signals from the device (1) to the evaluation device (3).

13. Device (1) according to one of Claims 1 to 11 for evaluating a signal supplied from an acceleration sensor (11) recording the vehicle acceleration, and having an ignition device (4), disposed spatially separately from the device (1), for triggering an ignition element of the occupant protection system, which ignition element is electrically connected to the ignition device (4), in which messages (N) are transmitted in the form of signals from the device (1) to the ignition device (4).

## Revendications

1. Dispositif pour la commande d'un moyen de protection des occupants dans un véhicule automobile, comprenant une unité de commande (12) qui comprend elle-même un codeur (121) pour le codage de messages (N) et un émetteur (122) pour l'émission des messages codés (CN) sous la forme de signaux, **caractérisé en ce qu'**il est prévu un premier message codé contenant une information importante pour la sécurité, ce message étant muni d'un premier nombre de positions, et un deuxième message codé qui est muni d'un deuxième nombre de positions, le premier nombre étant plus petit que le deuxième nombre.

2. Dispositif pour la commande d'un moyen de protection des occupants dans un véhicule automobile, en particulier selon la revendication 1, comprenant une unité de commande (12) qui comprend elle-même un codeur (121) pour le codage de messages (N) et un émetteur (122) pour l'émission de messages codés (CN) sous la forme de signaux, **caractérisé en ce que** les messages codés (CN) présentent chacun un mot d'information (IN) et un mot de commande (ST), **en ce que** le mot d'information (IN) d'un premier message codé contenant une information importante pour la sécurité possède un premier nombre de positions, et que le mot d'information d'un deuxième message codé possède un deuxième nombre de positions, le premier nombre étant plus petit que le deuxième nombre.

3. Dispositif pour la commande d'un moyen de protection des occupants dans un véhicule automobile, en particulier selon la revendication 1 ou la revendication 2, comprenant une unité de commande (12) qui comprend elle-même un codeur (121) pour le codage d'un message (N) contenant une information importante pour la sécurité et un émetteur (122) pour l'émission du message codé (CN) sous la forme d'un signal, **caractérisé en ce que** le message (N) est codé avec un message de correction d'erreur (FKC).

4. Dispositif selon l'une des revendications précédentes, **caractérisé en ce qu'**un message codé (CN) contient deux mots d'information identiques.

5. Dispositif selon la revendication 3, **caractérisé en ce qu'**au moins un des messages (N) prévus est codé de telle manière que le message codé (CN) présente un mot d'information (IN) possédant un premier nombre de positions pour un mot accompagné d'un code de correction d'erreur (FKC) et un deuxième nombre de positions pour un mot sans code de correction d'erreur.

6. Dispositif selon la revendication 1 ou la revendication 2 et la revendication 5, **caractérisé en ce que** le premier message est codé avec un code de correction d'erreur (FKC) et que le deuxième message est codé partiellement avec, et partiellement sans, un code de correction d'erreur (FKC).

7. Dispositif selon la revendication 2 et la revendication 3, **caractérisé en ce que** le mot de commande (ST) présente au moins deux positions prévues pour un caractère de départ, un caractère de départ signalant le début d'un mot d'information (IN).

8. Dispositif selon la revendication 7, **caractérisé en ce que** le mot de commande (ST) présente au moins une position de réserve qui peut être occupée par un caractère et qui peut être associée au mot d'information (IN).

9. Dispositif selon la revendication 7, **caractérisé en ce que** le mot de commande (ST) présente au moins deux positions prévues pour un caractère d'arrêt, un caractère d'arrêt signalant la fin d'un mot d'information (IN).

10. Dispositif selon la revendication 1 ou 2, **caractérisé en ce que** le premier message contient une information classée en rang supérieur et que le deuxième message contient une information classée en rang inférieur.

11. Dispositif selon la revendication 10, **caractérisé en ce que** le premier message contient une information pour un déclenchement indirect ou direct du moyen de protection des occupants et **en ce que** le deuxième message contient une information d'état du dispositif (1).

12. Dispositif (1) selon l'une des revendications précédentes, comprenant un capteur d'accélération (11) destiné à capter une accélération du véhicule et un dispositif d'analyse (3) disposé séparément du dispositif (1) dans l'espace et destiné à commander le moyen de protection des occupants (4), des messages fonction de l'accélération étant transmis du dispositif (1) au dispositif d'analyse (3) sous la forme de signaux.

13. Dispositif (1) selon l'une des revendications 1 à 11, pour l'analyse d'un signal fourni par un capteur d'accélération (11) qui capte l'accélération du véhicule, et comprenant un dispositif d'allumage (4) disposé séparément du dispositif (1) dans l'espace, destiné à déclencher un élément d'allumage du moyen de protection des occupants, qui est connecté électriquement au dispositif d'allumage (4), des messages (N) étant transmis du dispositif (1) au dispositif d'allumage (4) sous forme de signaux.
